# FASCICULE DE BREVET EUROPEEN

(11) **EP 0 504 295 B1**
(45) Date de publication et mention de la délivrance du brevet: **14.09.1994**
(21) Numéro de dépôt: 91901509.9
(22) Date de dépôt: 06.12.1990
(51) Int. Cl.: B23B 7/04, B23B 29/32, B23Q 39/04

(54) **TOUR DE DECOLLETAGE A POUPEE FIXE ET BROCHE DE REPRISE**
DREHAUTOMAT MIT UNBEWEGLICHEM SPINDELSTOCK UND AUFBEARBEITUNGSSPINDEL
BAR TURNING LATHE WITH FIXED POPPET AND RETAKING SPINDLE

(30) Priorité: 07.12.1989 FR 8916369
(43) Date de publication de la demande: 23.09.1992
(73) Titulaire: K'MX Technologie S.A., 68200 Mulhouse (FR)
(72) Inventeur: GENSBITTEL, François, F-68200 Brunstatt (FR); GIRNY, Gérard, F-68200 Brunstatt (FR)
(74) Mandataire: Nithardt, Roland
(86) Numéro de dépôt international: FR9000887
(87) Numéro de publication internationale: WO9108852

(56) Documents cités:
- AT-B- 0 204 347
- DE-A- 3 626 324
- FR-A- 1 087 028
- Patent Abstracts of Japan, volume 13, no. 20 (M-785)(3368), 18 janvier 1989, & JP A 63229201 (FUJITSU LTD), 26 septembre 1988

## Description

La présente invention concerne un tour de décolletage à poupée fixe comportant une broche principale portant une pièce à usiner, une première tourelle porte-outils principale et une deuxième tourelle porte-outils principale, ladite première tourelle porte-outils principale étant mobile selon deux axes orthogonaux dont l'un est parallèle à l'axe de la broche principale et ladite deuxième tourelle porte-outils principale étant mobile selon au moins un axe parallèle à celui de la broche principale, une tourelle porte-outils auxiliaire mobile selon un axe parallèle à celui de la broche principale, ladite deuxième tourelle porte-outils principale portant une broche de reprise agencée pour prendre en charge une pièce au moins partiellement usinée et préalablement portée par la broche principale, cette broche de reprise étant agencée pour présenter cette pièce au moins partiellement usinée à au moins un outil porté par ladite tourelle porte-outils auxiliaire, la première tourelle porte-outils principale portant au moins un outil d'usinage de la pièce et au moins un outil de coupe, la deuxième tourelle porte-outils principale portant au moins un outil d'usinage de la pièce à usiner portée par la broche principale, l'outil d'usinage porté par la deuxième tourelle porte-outils principale pouvant être un outil de perçage ou d'alésage fixe, la tourelle porte-outils auxiliaire portant au moins un outil d'usinage de la pièce partiellement usinée portée par une broche de reprise et entraînée en rotation par cette dernière, l'outil d'usinage porté par la tourelle porte-outils auxiliaire pouvant être un outil de perçage ou d'alésage, l'outil d'usinage et la broche de reprise portés par la deuxième tourelle principale étant disposés à 180° l'un par rapport à l'autre (voir par exemple DE-A-3 626 324).

On connaît déjà de nombreux types de tours comportant une tourelle principale portant divers outils pour usiner une pièce et une tourelle secondaire portant au moins un outil, généralement d'alésage ou de perçage pour usiner simultanément cette pièce sur la face libre, selon une direction axiale.

Pour l'usinage de pièces compliquées, tels que raccords, embouts qui sont profilées sur leurs deux faces opposées, il est nécessaire de reprendre les pièces pour leur faire subir une deuxième opération d'usinage.

Une telle reprise est gênante et engendre une perte de temps qui renchérit les prix de fabrication de ces pièces.

Parmi les publications antérieures décrivant des systèmes analogues, on peut mentionner la demande de brevet allemand DE-A-3 626 324 qui concerne un tour à deux tourelles et une tourelle auxiliaire. Toutefois, dans cette réalisation, la tourelle auxiliaire est fixe, disposée en regard des tourelles principales, ce qui n'autorise pas une disposition frontale ni un usinage simultané de pièces pris en charge par une broche de reprise.

La présente invention se propose de pallier ces inconvénients en réalisant un tour capable d'usiner les deux faces opposées d'une pièce mécanique, tout en conservant une disposition frontale des deux tourelles principales, ce qui garantit un accès particulièrement aisé.

Dans ce but, le tour selon l'invention est caractérisé en ce que la tourelle porte-outils auxiliaire est embarquée sur le support de la deuxième tourelle principale, et en ce que la deuxième tourelle porte-outils principale porte un chariot mobile axialement selon un axe parallèle à l'axe de la broche principale, ce chariot portant au moins un outil d'usinage agencé pour percer ou aléser une pièce entraînée en rotation par la broche de reprise.

De préférence, l'outil porté par la deuxième tourelle porte-outils principale est agencé pour travailler sur une pièce portée par la broche principale et l'outil porté par la tourelle porte-outils auxiliaire est agencé pour travailler simultanément sur une pièce portée par la broche de reprise.

La présente invention sera mieux comprise en référence à la description d'un exemple de réalisation préférée et des dessins annexés, dans lesquels :
- la figure 1 est une vue en perspective illustrant les composants essentiels du tour de décolletage selon l'example de réalisation de l'invention,
- la figure 2 représente une vue schématique partiellement en coupe du tour de décolletage de la figure 1,
- la figure 3 représente une première séquence de travail du tour de la figure 2,
- la figure 4 représente une vue schématique d'une deuxième séquence de travail du tour illustré par les figures précédentes, et
- la figure 5 représente une vue partielle d'une variante dans laquelle la tourelle auxiliaire est montée latéralement.

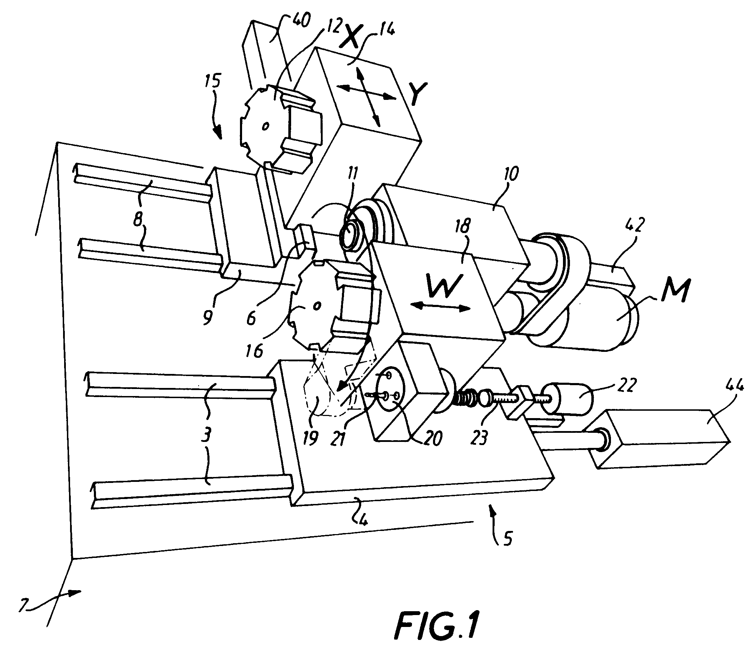

En référence aux figures 1 à 4, le tour tel que représenté, comporte essentiellement une broche principale 10 portant une pièce 11 à usiner, entraînée en rotation autour de l'axe de cette broche. Il comporte par ailleurs une première tourelle principale 12 qui porte un ou plusieurs outils 13 qui peuvent être amenés dans une position appropriée pour assurer l'usinage de la pièce 11. A cet effet, la tourelle est solidaire d'un corps 14 dans lequel est monté son axe de rotation et qui est porté par un support 15 agencé pour permettre les déplacements de cette tourelle selon deux axes perpendiculaires X et Y. Le support 15 se compose d'un chariot mobile 9 qui peut coulisser dans la direction définie par l'axe Y sur deux coulisses 8 parallèles, montées sur le bâti 7 du tour et de deux glissières 6 solidaires du chariot mobile 9 et qui permettent au corps 14 et par conséquent à la tourelle principale 12 de se déplacer selon l'axe X.

Il comporte par ailleurs une deuxième tourelle principale 16 sur laquelle est monté au moins un outil 17, qui est un outil d'alésage ou de perçage agencé pour travailler la face libre de la pièce 11.

Cette deuxième tourelle principale 16 est solidaire d'un corps 18 qui est mobile en translation selon un axe W. A cet effet, cette deuxième tourelle principale 16 et son corps 18 sont portés par un support 5 qui est constitué d'un chariot mobile 4 qui peut coulisser dans la direction définie par l'axe W sur deux glissières parallèles 3 qui sont également montées sur le bâti 7 du tour.

Le déplacement selon l'axe X de la première tourelle principale est obtenu grâce à un moteur d'entraînement 40 d'une vis sans fin 41 couplée au corps 14 de la tourelle 12. Le déplacement selon l'axe Y de cette tourelle est obtenu grâce à un moteur d'entraînement 42 d'une vis 43 couplée au chariot 9. Le déplacement selon l'axe W de la deuxième tourelle principale 16 est obtenu grâce à un moteur d'entraînement 44 d'une vis 45 couplée au chariot 5. Il est bien entendu que ces déplacements pourraient être réalisés par d'autres moyens mécaniques connus, notamment par des vérins hydrauliques.

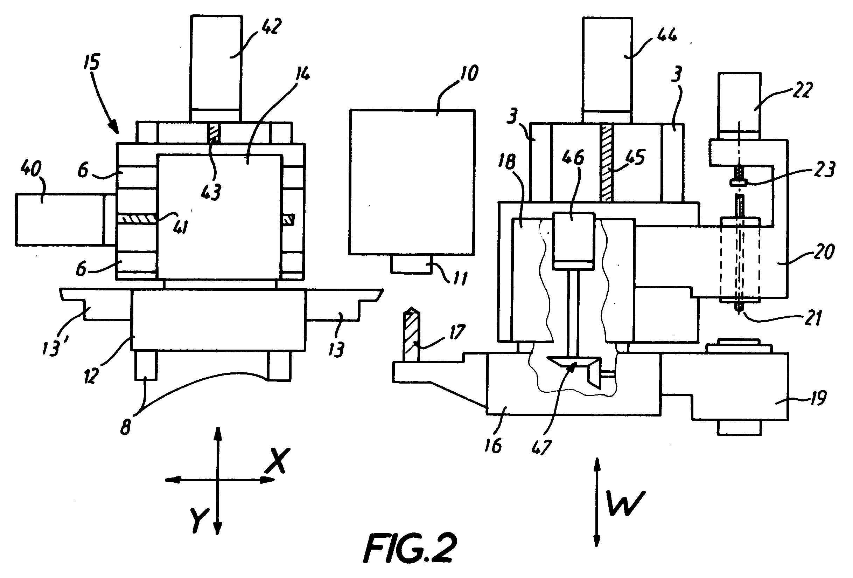

Enfin, cette deuxième tourelle principale 16 peut pivoter d'un angle de 180° pour permettre à l'outil de perçage, alésage de venir dans la position représentée sur la figure 2, et de se déplacer vers une position de repos à 180° de la précédente pour permettre à une broche de reprise 19, également portée par cette tourelle de prendre en charge la pièce 11, lorsqu'elle a été usinée par les outils 13 portés par la première tourelle principale 12.

Les moyens d'entraînement en rotation desdites première et deuxième tourelle principales ne sont pas représentés sur les figures.

En revanche, ces figures montrent les moyens d'entraînement de la broche de reprise 19 qui est rotative pour permettre l'usinage de la face arrière de la pièce 11 préalablement usinée sur sa face avant par l'outil 17. Ces moyens d'entraînement comportent un moteur 46 monté dans le corps 18 et une transmission appropriée 47.

Enfin, le tour représenté porte une tourelle porte-outils auxiliaire 20 agencée pour porter au moins un outil 21 dont le rôle est d'assurer l'usinage sur la face de coupe de la pièce 11. La tourelle auxiliaire 19 est fixée de façon rigide au corps 18 de la deuxième tourelle principale 16, de sorte qu'elle se déplace parallèlement à l'axe W et en même temps qu'elle. Un moteur 22 coopère avec une vis 23 pour déplacer axialement l'outil 21. Dans la pratique l'outil 21 est monté sur une tourelle qui porte au moins trois outils de perçage ou d'alésage qui peuvent être amenés en position de travail suite à un déplacement indexé en rotation de cette tourelle. Les outils sont en principe fixes, mais pourraient également être tournants. Dans ce dernier cas, ils sont entraînés en rotation par un moteur embarqué.

Comme le montre plus précisément la figure 1, la broche principale est entraînée en rotation par un moteur d'entraînement M. On travaille directement sur la barre de matière première, et l'avance de cette barre peut être réalisée par un dispositif spécial connu en soi qui est associé au tour.

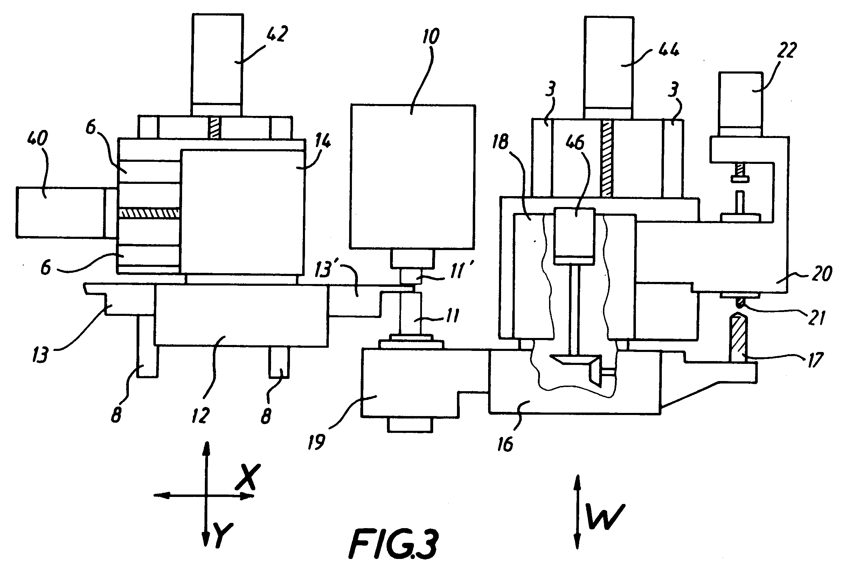

La figure 3 représente plus particulièrement une première séquence de travail du tour représenté. La pièce qui a été préalablement usinée par l'outil 13 porté par la première tourelle principale, et simultanément par l'outil de perçage ou d'alésage 17, est coupée par un outil de coupe 13' porté par cette même tourelle puis repris par la broche de reprise 19. L'outil de perçage ou d'alésage 17 de la deuxième tourelle principale se trouve dans une position de repos, après que la deuxième tourelle principale 16 ait pivoté d'un angle de 180° autour de l'axe W de son corps 18. Dans la phase précédente, cet outil était en place en face de la pièce 11 et assurait des interventions de perçage et/ou d'alésage pendant que d'autres opérations d'usinage étaient exécutées par le ou les outils 13.

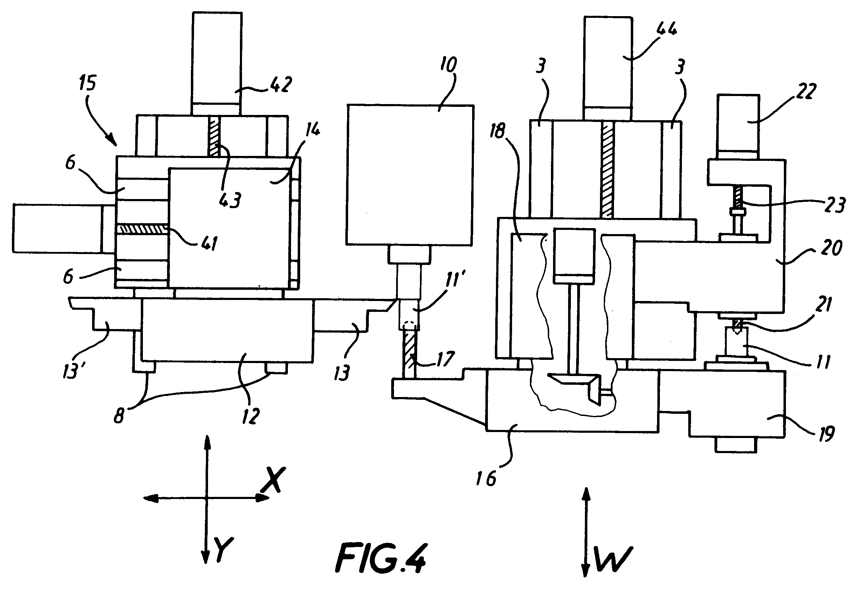

Comme le montre la figure 4, après une nouvelle rotation de 180° autour de l'axe W, la deuxième tourelle principale 16, positionne l'outil de perçage ou d'alésage 17 en regard d'une nouvelle pièce 11' à usiner et la pièce préalablement usinée 11, reprise par la broche de reprise, en regard de la tourelle auxiliaire 20. De ce fait, les deux opérations suivantes peuvent être effectuées simultanément :
a) l'usinage par l'outil 21 de la face de coupe d'une pièce 11 préalablement usinée sur l'autre face au moyen d'outils indexés portés par la tourelle auxiliaire,
b) le perçage ou l'alésage d'une nouvelle pièce 11' par l'outil 17,
c) l'usinage par l'outil 13 de cette nouvelle pièce 11'.

Outre le fait que cet usinage simultané présente de très nombreux avantages et permet d'améliorer la productivité du tour, notamment en raison du fait que les opérations de perçage sont généralement très longues, cette construction a l'avantage de présenter une configuration frontale, ce qui réduit l'encombrement, facilite l'accès et améliore le confort d'utilisation de la machine.

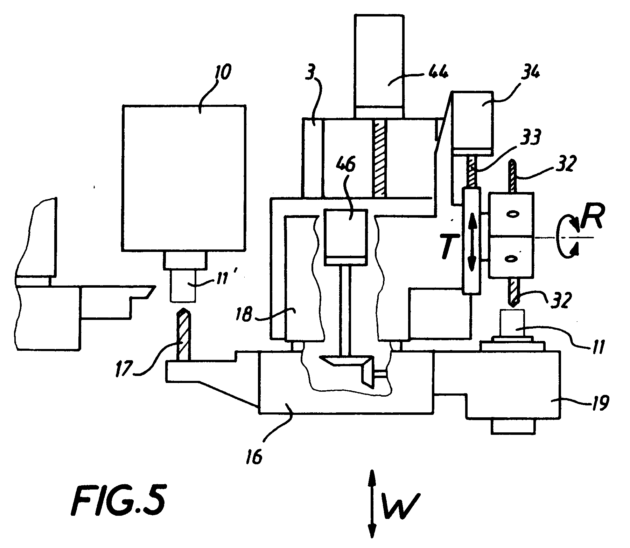

La figure 5 illustre une variante selon laquelle la tourelle auxiliaire est disposée différemment de celle de l'exemple de réalisation précédent. Dans cette variante, le corps 18 de la deuxième tourelle principale 16 porte un chariot 30, mobile en translation selon l'axe T. Ce chariot sert de support à une tourelle 31, agencée pour pivoter autour d'un axe R perpendiculaire à l'axe T. Cette tourelle peut être du type hexagonal et peut par exemple porter six outils 32 susceptibles d'être amenés respectivement en position pour usiner la face de coupe d'une pièce 11' préalablement usinée sur l'autre face. Le déplacement selon l'axe T est effectué au moyen d'une vis sans fin 33 entraînée par un moteur 34.

Un avantage particulièrement intéressant de ces réalisations réside dans le fait que les réglages peuvent être faits aisément, l'accès étant assuré sur trois côtés de la machine grâce à l'existence d'un capot (non représenté) pouvant être soulevé verticalement.

La présente invention n'est pas limitée aux formes de réalisation décrites, mais peut être modifiée par l'homme de l'art.

## Revendications

1. Tour de décolletage à poupée fixe comportant une broche principale (10) portant une pièce (11) à usiner, une première tourelle porte-outils principale (12) et une deuxième tourelle porte-outils principale (16), ladite première tourelle porte-outils principale (12) étant mobile selon deux axes orthogonaux dont l'un est parallèle à l'axe de la broche principale (10) et ladite deuxième tourelle porte-outils principale (16) étant mobile selon au moins un axe parallèle à celui de la broche principale (10), une tourelle porte-outils auxiliaire (20) mobile selon un axe parallèle à celui de la broche principale (10), ladite deuxième tourelle porte-outils principale (16) portant une broche de reprise (19) agencée pour prendre en charge une pièce (11) au moins partiellement usinée et préalablement portée par la broche principale (10), cette broche de reprise étant agencée pour présenter cette pièce au moins partiellement usinée à au moins un outil (21) porté par ladite tourelle porte-outils auxiliaire (20), la première tourelle porte-outils principale (12) portant au moins un outil d'usinage de la pièce et au moins un outil de coupe, la deuxième tourelle porte-outils principale (16) portant au moins un outil d'usinage de la pièce à usiner portée par la broche principale (10), l'outil d'usinage porté par la deuxième tourelle porte-outils principale (16) pouvant être un outil de perçage ou d'alésage fixe, la tourelle porte-outils auxiliaire (20) portant au moins un outil d'usinage de la pièce partiellement usinée portée par une broche de reprise (19) et entraînée en rotation par cette dernière, l'outil d'usinage porté par la tourelle porte-outils auxiliaire (20) pouvant être un outil de perçage ou d'alésage, l'outil d'usinage et la broche de reprise (19) portés par la deuxième tourelle principale (16) étant disposés à 180° l'un par rapport à l'autre, caractérisé en ce que la tourelle porte-outils auxiliaire (20) est embarquée sur le support de la deuxième tourelle principale (16), et en ce que la deuxième tourelle porte-outils principale (16) porte un chariot (30) mobile axialement selon un axe (T) parallèle à l'axe de la broche principale, ce chariot portant au moins un outil d'usinage (32) agencé pour percer ou aléser une pièce entraînée en rotation par la broche de reprise (19).

2. Tour de décolletage selon la revendication 1, caractérisé en ce que l'outil (17) porté par la deuxième tourelle porte-outils principale (16) est agencé pour travailler sur une pièce (11) portée par la broche principale (10) et en ce que l'outil (21) porté par la tourelle porte-outils auxiliaire (20) est agencé pour travailler simultanément sur une pièce (11') portée par la broche de reprise (19).

## Claims

1. Bar turning lathe with fixed poppet comprising a main spindle (10) carrying a part (11) to be machined, a first primary tool holder turret (12) and a second primary tool holder turret (16), the said first primary tool holder turret (12) moving along two orthogonal axes, one of which is parallel to the axis of the main spindle (10) and the said second primary tool holder turret (16) moving along at least one axis parallel to that of the main spindle (10), an auxiliary tool holder turret (20) which moves along an axis parallel to that of the main spindle (10), the said second primary tool holder turret (16) carrying a retaking spindle (19) arranged to pick up a part (11) which is at least partially machined and previously carried by the main spindle (10) with this retaking spindle being arranged to present this at least partially machined part to at least one tool (21) carried by the aforementioned auxiliary tool holder turret (20), the first primary tool holder turret (12) carrying at least one tool for machining the part and at least one parting-off tool, the second primary tool holder turret (16) carrying at least one tool for machining the part to be machined carried by the main spindle (10), the machining tool carried by the second primary tool holder turret being able to be a fixed drilling or boring tool, the auxiliary tool holder turret (20) carrying at least one tool for machining the partially machined part carried by the retaking spindle (19) and rotated by the latter, the machining tool carried by the auxiliary tool holder turret (20) being able to be a drilling or boring tool, the machining tool and the retaking spindle (19) carried by the second primary turret (16) being set at an angle of 180° in relation to one another, characterised in that the auxiliary tool holder turret (20) is fitted on the support of the second primary tool holder turret (16) and in that the second primary tool holder turret (16) carries an arm (30) which moves axially along an axis (T) which is parallel to the main spindle's axis. This arm carries at least one machining tool (32) arranged to drill or bore a part rotated by the retaking spindle (19).

2. Bar turning lathe of claim 1, wherein the tool (17) carried by the second primary tool holder turret (16) is arranged to work on a part (11) carried by the main spindle (10) and wherein the tool (21) carried by the auxiliary tool holder turret (20) is arranged to work simultaneously on a part (11') carried by the retaking spindle (19).

## Patentansprüche

1. Abstechdrehbank mit Spindelstock bestehend aus einer, ein zu bearbeitendes Werkstück (11) tragenden, Hauptspindel (10), einem ersten Haupt-Werkzeugrevolverkopf (12) und einem zweiten Haupt-Werkzeugrevolverkopf (16), wobei der erste Haupt-Werkzeugrevolverkopf (12) in zwei rechtwinklig zueinander stehenden Achsen bewegbar ist, wovon eine parallel zur Achse der Hauptspindel (10) liegt und der zweite Haupt-Werkzeugrevolverkopf (16) in mindestens einer Achse parallel zu derjenigen der Hauptspindel (10) liegt, einem in einer Achse parallel zu derjenigen der Hauptspindel (10) bewegbaren Hilfs-Werkzeugrevolverkopf (20), wobei der zweite Haupt-Werkzeugrevolverkopf (16) eine Aufnahmespindel (19) trägt, die dazu dient, ein wenigstens teilweise bearbeitetes und vorher von der Hauptspindel (10) getragenes Werkstück (11) aufzunehmen, und diese Aufnahmespindel so ausgeführt ist, daß sie dieses wenigstens teilweise bearbeitete Werkstück für mindestens ein von dem Hilfs-Werkzeugrevolverkopf (20) getragenes Werkzeug (21) bereithält, wobei der erste Haupt-Werkzeugrevolverkopf (12) mindestens ein Werkzeug zur spanenden Bearbeitung des Werkstückes und mindestens ein Abstechwerkzeug trägt, und der zweite Haupt-Werkzeugrevolverkopf (16) mindestens ein Werkzeug zur spanenden Bearbeitung des zu bearbeitenden und von der Hauptspindel (10) getragenen Werkstückes trägt, wobei das von dem zweiten Haupt-Werkzeugrevolverkopf (16) getragene Werkzeug ein feststehendes Werkzeug zum Bohren oder zum Ausdrehen sein kann, und der Hilfs-Werkzeugrevolverkopf (20) mindestens ein Werkzeug zur spanenden Bearbeitung des teilweise bearbeiteten Werkstückes trägt, wobei letzteres von einer Aufnahmespindel (19) gehalten und durch diese in Drehung versetzt ist, wobei das von dem Hilfs-Werkzeugrevolverkopf (20) gehaltene Werkzeug zur spanenden Bearbeitung ein Werkzeug zum Bohren oder zum Ausdrehen sein kann und das Bearbeitungswerkzeug und die von dem zweiten Haupt-Werkzeugrevolverkopf (16) getragene Aufnahmespindel (19) zueinander um 180° versetzt angeordnet sind,
**dadurch gekennzeichnet,** daß der Hilfs-Werkzeugrevolverkopf (20) auf dem Support für den zweiten Haupt-Werkzeugrevolverkopf (16) befestigt ist und daß der zweite Haupt-Werkzeugrevolverkopf (16) einen, parallel zur Achse der Hauptspindel gemäß Achse (T) axial bewegbaren Schlitten (30) trägt, wobei dieser Schlitten mindestens ein Bearbeitungswerkzeug (32) trägt, welches dazu dient, ein durch die Aufnahmespindel (19) in Drehung versetztes Werkstück zu bohren oder auszudrehen.

2. Abstechdrehbank nach Anspruch 1,
**dadurch gekennzeichnet,** daß das von dem zweiten Haupt-Werkzeugrevolverkopf (16) aufgenommene Werkzeug (17) so ausgeführt ist, daß es an einem, von der Hauptspindel (10) getragenen Werkstück (11) arbeiten kann und daß das von dem Hilfs-Werkzeugrevolverkopf (20) gehaltene Werkzeug (21) so ausgeführt ist, daß es gleichzeitig an einem von der Aufnahmespindel (19) gehaltenen Werkstück (11') arbeiten kann.
